# EUROPÄISCHE PATENTSCHRIFT

(11) **EP 2 324 739 B1**
(45) Veröffentlichungstag und Bekanntmachung des Hinweises auf die Patenterteilung: **02.10.2013**
(21) Anmeldenummer: 10008402.9
(22) Anmeldetag: 12.08.2010
(51) Int. Cl.: A47J 27/58

(54) **Kochgefäßaufsatz zum Verhüten des Überkochens von Flüssigkeiten**
Cooking container attachment for preventing liquids from being overcooked
Couvercle de récipient de cuisson pour éviter le débordement de liquides

(30) Priorität: 17.09.2009 DE 102009041866
(43) Veröffentlichungstag der Anmeldung: 25.05.2011
(60) Teilanmeldung: 12184891.5
(73) Patentinhaber: Harecker, Armin, 84424 Isen (DE)
(72) Erfinder: Harecker, Armin, 84424 Isen (DE)
(74) Vertreter: HOFFMANN EITLE

(56) Entgegenhaltungen:
- WO-A1-2007/052889
- FR-A- 737 478
- US-A- 5 927 183
- US-A- 6 125 842
- US-A1- 2007 045 304

## Beschreibung

Die Erfindung betrifft einen Kochgefäßaufsatz nach Patentanspruch 1. Der Kochgefäßaufsatz dieser Art ist gemäß DE-GM 87 13 234 schalenförmig ausgebildet und kann auf Kochgefäße mit unterschiedlichen Durchmessern aufgelegt werden. Ein Überkochen der Kochflüssigkeit wird dadurch verhindert, dass der Kochgefäßaufsatz zumindest einen relativ großen Durchtrittsöffnungsquerschnitt für die aufschäumende Kochflüssigkeit aufweist. Die Durchtrittsöffnungen sind derart ausgerichtet und ausgebildet ist, dass die Kochflüssigkeit in eine Drehbewegung versetzt wird und somit ein schnelleres Abkühlen der Kochflüssigkeit erreicht wird. Dann fließt die abgekühlte Kochflüssigkeit wieder in das Kochgefäß zurück.

Um ein Anheben des gesamten, offensichtlich aus Metall gebildeten Kochgefäßaufsatzes beim plötzlichen und kraftvollen Hochkochen von Kochflüssigkeiten wie bspw. Milch zu vermeiden, muss der freie Öffnungsquerschnitt der Durchtrittsöffnung bzw. der Durchtrittsöffnungen selbst bei hohem Gewicht des Aufsatzes sehr groß sein. Je größer der Querschnitt der Durchtrittsöffnungen ist, desto zuverlässiger funktioniert der Kochgefäßaufsatz. Durch diese große Durchtrittsöffnung entweicht jedoch nutzlos ein hoher Anteil an Heizenergie während des gesamten Kochvorganges. Weiter führen schon geringste Unebenheiten am oberen Auflagerand des Kochgefäßes oder ein nicht exakt in einer Ebene liegender Auflagerand des Kochgefäßes zum Flüssigkeits- bzw. Schaumaustritt zwischen dem Kochgefäß und dem Kochgefäßaufsatz.

Aus der US 5,927,183 ist ein Topfdeckel bekannt, der im aufgelegten Zustand nach oben gewölbt ist. Zum Entweichen von Gasdruck weist der Topfdeckel eine Art Ventil auf, durch das hochkochende Flüssigkeit auf die Oberfläche des Topfdeckels gelangen kann. Diese Flüssigkeit läuft entlang der Oberfläche des Topfdeckels ab und tropft von dort auf die Kochstelle.

Aus der US 1,436,606 ist ein Kochgefäßaufsatz mit integrierter Auffangschale bekannt, wobei ein in den Kochgefäßaufsatz integrierter mittiger Deckel über eine seitliche Wippe aufgelegt und über ein Gegengewicht derart ausbalanciert ist, dass der Deckel einer durch Gasdruck oder Schaumbildung entstehenden Öffnungsbewegung geringfügig entgegenwirkt. Austretende Flüssigkeit sammelt sich in der durch den Kochgefäßaufsatz gebildeten Auffangschale und gelangt von dort aus wieder in den Topf.

Aus der FR 737.478 ist ebenfalls ein Kochgefäßaufsatz bekannt, der einen unteren Deckel und einen oberen Deckel umfasst. Diese Deckel sind in bzw. auf die Schale des Kochgefäßaufsatzes gelegt und schwimmen bei erhöhtem Gasdruck innerhalb des Kochgefäßes bzw. beim Überschäumen auf. Eine Verbindung der Deckel mit der Auffangschale ist nicht vorgesehen.

Der Erfindung liegt nun die Aufgabe zugrunde, einen Kochgefäßaufsatz der eingangs genannten Art zu schaffen, der noch zuverlässiger den Austritt von hochkochender bzw. hochschäumender Flüssigkeit bei unterschiedlichen Kochgefäßen verhindert und dabei einen energiesparenden Kochvorgang gewährleistet.

Während des Kochvorganges ist die Durchtrittsöffnung bzw. sind die Durchtrittsöffnungen geschlossen, womit der Kochgefäßaufsatz wie ein geschlossener, energiesparender Deckel wirkt. Exakt beim Hochkochen der Flüssigkeit, also wenn die hochkochende Flüssigkeit in Kontakt mit dem Verschlussteil gelangt, entfaltet der Kochgefäßaufsatz seine Funktion als Überkochverhinderer, indem die hochkochende Flüssigkeit bzw. der hochkochende Schaum das jeweilige Verschlussteil in die Öffnungsstellung drückt. Dies erfolgt rasch und unter Überwindung des der Öffnungsbewegung entgegenstehenden Widerstandes des flächigen Verschlussteils.

Leicht erkennbar entspricht dieser Widerstand vorrangig der Eigengewichtskomponente und zweitrangig noch einer möglichen Verformungskomponente des Verschlussteils. Ebenso ist somit erkennbar, dass das Verschlussteil möglichst geringgewichtig sein muss und leichtbeweglich verbunden sein muss um ein schnelles und zuverlässiges Öffnen und Schließen des Verschlussteils zu gewährleisten.

Durch die geöffnete Durchtrittsöffnung gelangt somit die hochkochende Flüssigkeit in die Schale, wo ein Energieabbau sowie eine Abkühlung der hochkochenden Flüssigkeit und deren Rückfluss durch die geöffnete Durchtrittsöffnung erfolgen.

Beim erfindungsgemäßen Kochgefäßaufsatz geht also bis zum Erreichen des Siedepunktes der Kochflüssigkeit keine Heizenergie verloren. Erst beim gefährlichen Hochkochen der Flüssigkeit öffnet sich das Verschlussteil entgegen der genannten Widerstandskraft durch die Kraftbeaufschlagung der hochkochenden Flüssigkeit. Durch die flächige, geringgewichtige und mit dem Kochgefäßaufsatz leichtbeweglich verbundene Verschlussteilkonstruktion wird erreicht, dass deren Öffnungswiderstand sehr gering ist und damit auch schon eine geringe, nach oben gerichtete Kraftkomponente der aufkochenden bzw. aufschäumenden Kochflüssigkeit das Verschlussteil in die Öffnungsstellung bringt.

Bedeutend ist hierbei, dass sich das Verschlussteil selbsttätig nur so weit wie nötig öffnet. Je höher der von unten ausgeübte Druck ist, je weiter öffnet das Verschlussteil die Durchtrittsöffnung. Die Durchtrittsöffnungen selbst kann also ohne Energieverlust zu verursachen relativ groß gewählt werden. Damit zusammenhängend kann auch das Gesamtgewicht des Kochgefäßaufsatzes dank der sensibel reagierenden Verschlussteile deutlich reduziert werden, da sich dieses Gesamtgewicht nicht gegen eine feste Kraftkomponente der aufkochenden bzw. aufschäumenden Kochflüssigkeit stemmen muss. Vielmehr bestimmt die aufkochende Flüssigkeit selbst, wie weit das Verschlussteil geöffnet wird, bzw. welcher Öffnungsquerschnitt frei gegeben wird.

Die Öffnungsweite des Verschlussteils ändert sich ständig während des Aufkochvorganges als Reaktion auf die dort gerade wirkende Kraft der aufkochenden bzw. aufschäumenden Flüssigkeit. Diese Änderung der Öffnungsweite, die bis zu einem Flattern der Verschlussteils führen kann, hat den Effekt, dass die Oberflächenspannung der aufschäumenden bzw. hochkochenden Flüssigkeit reduziert wird und damit ein Abbau der nach oben drückenden Kraftkomponente der Flüssigkeit während des Hochkochens erfolgt.

Dabei genügt eine zentrale Durchtrittsöffnung. Es können jedoch auch mehrere Durchtrittsöffnungen vorgesehen sein. Sie müssen nur innerhalb der Öffnungsweite des kleinsten verwendeten Kochgefäßes liegen, die üblicherweise 14 cm beträgt. Diese zentrale Durchtrittsöffnung oder die mehreren Durchtrittsöffnungen können sowohl von nur einem einzigen Verschlussteil oder mehreren Verschlussteilen verschlossen bzw. geöffnet werden.

Um den Kochgefäßaufsatz für Kochgefäße mit unterschiedlichen Innendurchmessern, z.B. von 14 cm bis 24 cm, und unterschiedlichen Oberrandausbildungen verwenden zu können sieht die Erfindung zumindest an den Kontaktflächen des Kochgefäßaufsatzes zu den unterschiedlichen Kochgefäßen, beispielsweise in den Ringbereichen von 14 cm, 16 cm, 18 cm, 20 cm, 22 cm, und 24 cm, eine elastisches Material, insbesondere Silikon vor. Damit ist auch gewährleistet, dass es zu keinem Flüssigkeits- oder Schaumaustritt zwischen dem Kochgefäßaufsatz und den unterschiedlichen Kochgefäßen kommt.

Die Ausbildungen des Kochgefäßaufsatzes nach dem Anspruch 1 gewährleisten eine höhere Funktionssicherheit, gewährleistet die Verwendbarkeit bei einem größeren Spektrum an unterschiedlichen Kochgefäßen und bewirkt, dass keine unnötige Energie während es Kochvorganges verloren geht.

Vorteilhafte Ausgestaltungen des Kochgefäßaufsatzes nach dem Hauptanspruch sind in den Unteransprüchen angegeben. Bei der Ausbildung nach den Ansprüchen 2 und 3 sind die Durchtrittsöffnungen in einem Kreisringbereich angeordnet. Dies führt zu einer symmetrischen Belastung des Kochgefäßaufsatzes während des Hochkochens der Flüssigkeit und zu einer einfachen Verschlussteilgestaltung. Hier bietet sich beispielsweise ein zentral mit dem Kochgefäßaufsatz verbundenes, tellerartiges Verschlussteil an, das auch in einzelne blütenblätterähnliche Einzelverschlussteile aufgefächert sein kann. Alternativ ist jeder Durchtrittsöffnung ein Verschlussteil zugeordnet.

Die Ausbildung nach Anspruch 4 ist besonders leicht herstellbar. Sie eignet sich besonders für den Fall, dass der Hauptschalenkörper aus Glas oder Metall gebildet wird. Beispielsweise wäre hier ein Verschlussteller angezeigt, der neben der Durchtrittsöffnung an dem Kochgefäßaufsatz an zwei gegenüberliegenden Punkten befestigt ist und mit beiden Hälften nach oben klappen kann. Es sind jedoch hier, ebenso wie bei den anderen Anordnungen der Durchtrittsöffnungen, viele Möglichkeiten der Verschlussteilausbildung gegeben, soweit sie die im Anspruch 1 genannten Bedingungen erfüllen. Es ist auch ein flächiges Verschlussteil denkbar, das mit dem Kochgefäßaufsatz so verbunden ist, dass es eine geführte, insbesondere vertikale Bewegung ausführen kann.

Die Ansprüche 5 bis 12 betreffen besonders geeignete Ausbildungen der Verschlussteile bzw. deren Zuordnung zu den Durchtrittsöffnungen. Grundsätzlich können die Verschlussteile so mit dem Kochgefäßaufsatz verbunden sein, dass sie sich radial nach außen oder innen, oder tangential oder zu jeder beliebigen Zwischenrichtung hin öffnen.

Gemäß Anspruch 7 ist das Verschlussteil zumindest bereichsweise aus elastischem Material hergestellt. Damit lässt sich gut das Bewegungsverhalten des Verschlussteils bestimmen. Ein elastischer Bereich kann beispielsweise ein elastisches Gelenk bilden, das auch als Filmscharnier ausgebildet sein kann.

Die Ausgestaltungen nach Ansprüchen 8 bis 10 ermöglichen eine feine Abstimmung des Verschlussteils in Hinblick auf dessen Offnungswiderstandes bzw. dessen Beweglichkeit und Sensibilität für die Bewegungen.

Mit der Ausbildung nach dem Anspruch 10, bei der die Dicke des Verschlussteils bevorzugt zu seinen freien, nicht mit dem Kochgefäßaufsatz verbundenen Rändern hin abnimmt wird erreicht, dass sich benachbarte Verschlussteile bei Ihrem Bewegungsweg zwischen der Ruhe- und Öffnungsstellung nicht gegenseitig Verklemmen sondern übereinander gleitbar sind. Anspruch 11 betrifft eine bevorzugte Ausbildung des Verschlussteils, die sich u.a. gut zur Verwendung bei der Kochgefäßaufsatzgestaltung nach Anspruch 13 eignen. Die Verschlussteile lassen sich einfach im Zentralbereich mit dem Kochgefäßaufsatz verbinden. Damit kann sich der anschließende Verschlussteilring oder die anschließenden Einzelverschlussteile lediglich um sehr kleine, am Zentralbereich Verbindungslinien verformen, wobei der Zentralbereichrand vorzugsweise als Polygonring ausgebildet ist.

Im Anspruch 14 sind Mittel angegeben, mit denen die Steifigkeit des Kochgefäßaufsatzes beeinflussbar ist, dessen zentrische Platzierung auf das Kochgefäß erleichtert werden kann und bestimmte Stellen markiert werden können.

Bei der Ausbildung des Kochgefäßaufsatzes nach dem Anspruch 13 ist eine besondere Formgebung gewählt. Folgt das Verschlussteil dieser Formgebung, was gemäß Anspruch 6 empfohlen wird, so spricht dieses besonders leicht und feinfühlig auf die hochkochende Flüssigkeit an. Da der äußere Verschlussteilbereich nach einer Richtungsumkehr in den schräg nach außen und unten geneigten Randabschnitt übergeht, fängt sich die hochkochende Flüssigkeit am äußeren Verschlussteilbereich und wirkt auf einer großen Angriffsfläche und mit einem großen Hebelarm am Verschlussteil.

Der Kochgefäßaufsatz kann auch mit Metalleinsätzen oder -ringen versehen sein. Insbesondere wenn dieser aus Silikon gefertigt ist, wirkt sich dies auf sein Gewicht und seine Steifigkeit aus. Bevorzugt sind die Einsätze oder Ringe bei der von Silikon umschlossen. Weiter lassen sich zusätzliche Kräfte auf den Kochgefäßaufsatz ausüben, wenn ein Permanentmagnet in seine Nähe gebracht wird. Es können auch leicht magnetische Zusatzgewichte oder Griffe angesetzt werden. Falls letzteres nicht erwünscht ist, kann die Steifigkeit auch durch z. B. härtere Kunststoffeinsätze oder -ringe beeinflusst werden.

Ist der Kochgefäßaufsatz gemäß Anspruch 14 gänzlich aus Silikon, so ist er besonders flexibel und gut an jegliche Ränder von Kochgefäßen anpassbar. Er lässt sich sogar, insbesondere durch Aufsetzen eines Zusatzgewichtes bei Kochgefäßen mit Ausgießschnäbeln verwenden. Soll der Kochgefäßaufsatz für Kochgefäße mit sehr großen Innendurchmessern verwendet werden, z.B. 28 cm oder mehr, so empfiehlt es sich einen einfach gestalteten Adapterring zu verwenden. Auf die Herstellung und Vorhaltung verschiedener Größen des komplizierter gestalteten Kochgefäßaufsatzes kann damit verzichtet werden.

Nachfolgend wird ein Ausführungsbeispiel des Kochgefäßaufsatzes gemäß der Erfindung anhand der Zeichnung beschrieben. Es zeigt:
- Fig. 1: einen Kochgefäßaufsatz mit geöffneten Verschlussteilen auf einem Kochgefäß, wobei zur besseren Darstellung ein Viertel herausgeschnitten ist.
- Fig. 2: einen Querschnitt durch ein Hälfte des Kochgefäßaufsatzes gemäß der Schnittführung B in Fig. 1
- Fig. 3: eine weitere Ausgestaltung eines Kochgefäßaufsatzes mit geöffneten Verschlussteilen auf einem Kochgefäß, wobei auch hier zur besseren Darstellung ein Viertel herausgeschnitten ist.

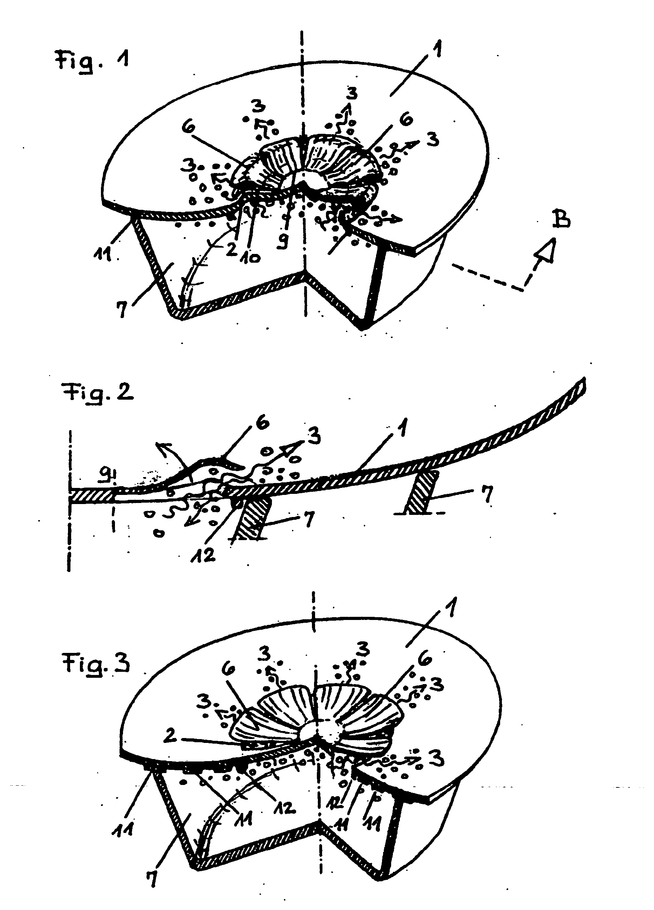

Der in Fig. 1 und 2 gezeigte, auf einem Kochtopf aufgelegte Kochgefäßaufsatz 1 ist vollständig aus Silikon gebildet und weist einen horizontalen, scheibenförmigen Zentralbereich auf, der von sechs Polygonseiten begrenzt ist. Daran schließen sich nach außen innerhalb eines Kreisringes gleichmäßig verteilt sechs Durchtrittsöffnungen (2) an, zwischen denen jeweils ein Verbindungssteg (10) vorhanden ist. Die Durchtrittsöffnungen (2) haben im wesentlichen einen tortenstückähnlichen Grundriss mit einer abgeschnitten Spitze. Außerhalb dieser, die abgeschnittene Spitze bildenden Linie (9), die sich als regelmäßiges Sechseck an den genannten Zentralbereich anschließt, sind die Verschlussteile (6) nicht mehr mit dem Kochgefäßaufsatz verbunden und bilden somit einzelne Verschlussteile (6). Diese Sechseckseiten bilden damit jeweils eine Art Gelenkachse für die einzelnen Verschlussteile (6). Der genannte Kreisring, in dem die Durchtrittsöffnungen (2) angeordnet sind, verläuft im Querschnitt gesehen im Anschluss an den Zentralbereich zunächst noch horizontal, steigt anschließend an, bildet daran anschließend einen Kuppelring und fällt darauf hin wieder nach unten, wo er in den äußeren Bereich der Schalenform übergeht. Die Verschlussteile (6) haben im wesentlichen die gleiche Gestalt wie die Durchtrittsöffnungen (2) bzw. der Kochgefäßaufsatz (1) im Bereich der Durchtrittsöffnungen (2) wobei diese jedoch leicht übergriffen werden und somit in der Ruhestellung auf den Verbindungsstegen (10) und dem radialen, äußeren Durchtrittsöffnungsrand aufliegen. Die einzelnen Verschlussteile (2) haben über den Verbindungsstegen (10) einen Abstand zueinander, womit ein störungsfreier Bewegungsablauf, der Durchtrittsöffnungen (2) gewährleistet ist. Das störungsfreie auf- und herabklappen der Verschlussteile (2) wird noch dadurch begünstigt, dass deren Dicke zu den freien Rändern hin abnimmt. Damit gleiten die Verschlusstelle allenfalls übereinander und verspreizen sich nicht bei ihrer Klappbewegung.

In diesem Falle ist ein Bauteil gefertigt, das aus dem polygonaler Zentralbereich mit daran anschließenden, wie voran beschrieben geformten, blütenblätterähnlichen Verschlussteilen (6). Dieses Bauteil ist auf den polygonalen Zentralbereich des Kochgefäßaufsatzes aufgesetzt und mit diesem so verbunden, dass ein einstückiges Gesamtbauteil entsteht.

In Figuren sind die Verschlussteile (6) in der geöffneten Position gezeigt. Die Schnittführung des in Figur 1 und 3 zur besseren Darstellung herausgeschnittene Viertels ist so gewählt, dass der linke Viertelrand durch einen Verbindungssteg (10) geführt ist und der rechte Viertelrand zwischen zwei Verbindungsstegen (10) verläuft.

In der geöffneten Position haben sich die Verschlussteile (6) durch die nach oben aufkochende Flüssigkeit (3) entgegen ihres Öffnungsbewegungswiderstandes aufgestellt, wobei der Offnungsbewegungswiderstand hauptsächlich aus der Eigengewichtskomponente und allenfalls geringfügig aus dem Verformungswiderstand des Verschlussteils (2) im Bereich der die Gelenkachse bildenden Verbindungslinie (9) resultiert.

Sofort beim Auftreffen der hochkochenden bzw. aufschäumenden Flüssigkeit (3) auf das Verschlusstell (2), klappt dieses nach oben und gibt der hochkochenden Flüssigkeit (3) den Weg in die Auffangschale frei. Dieser Kochvorgang kann sehr turbulent verlaufen, wobei das Verschlussteil (2) sensibel auf jeden unterschiedlichen Öffnungsdruck der Flüssigkeit so reagiert, dass der Öffnungsquerschnitt zwischen der Durchtrittsöffnung und der Schale gerade so weit wie nötig geöffnet wird. Damit ist wieder sichergestellt, dass keine unnötige Energie verbraucht wird und dass unter der wechselnden Hin- und Herbewegung des als Klappe wirkenden Verschlussteils (6) die Oberflächenspannung oder gar Hautbildung der hochgekochten Flüssigkeit vermindert wird.

Unterhalb der durch die Durchtrittsöffnungen (2) strömenden Flüssigkeit erfolgt ein Rückfluss der in der Schale abgekühlten Flüssigkeit. Ein Überkochen wird dabei auch bei anhaltendem Kochvorgang unterbunden.

Die grundsätzliche Öffnungsstellung der Verschlussteile (6) bleibt solange erhalten solange von der Kochstelle genügend Energie zugeführt wird. Wird die Energiezufuhr abgestellt, bewegen sich die Verschlussteile (6) wieder in ihre Ruhestellung. Wird die Energiezufuhr wieder erhöht, wird der Öffnungsvorgang wieder eingeleitet wird. Dieses Wechselspiel, könnte sich laufend wiederholen ohne dass ein Überkochen aus dem Kochgefäßaufsatz zu befürchten ist.

Bei dem Kochgefäßaufsatz (1) nach Fig. 3 ist die Schale aus einem Hartmaterial, beispielsweise Glas oder Aluminium hergestellt. Er könnte grundsätzlich, wie in Fig. 1 gezeigt, ebenso aus Silikon gebildet sein. Der Kochgefäßaufsatz (1) hat von seinem Zentrum bis zum Rand eine einfach herstellbare, gleichmäßige Schalenform.

Wie bei der Ausführung nach Fig. 1 sind auch bei diesem Ausführungsbeispiel sechs Durchtrittsöffnungen (2) gleichmäßig verteilt angeordnet. Sie haben im Wesentlichen einen tortenstückähnlichen Grundriss mit abgekanteter Spitze, sind unter Bildung von Verbindungsstegen (10) beabstandet zueinander und liegen zwischen einem Kreisring von weniger als 14 cm und einem Zentralbereich des Kochgefäßaufsatzes (1). Diesen Durchtrittsöffnungen ist ein dünnwandiges tellerartiges Verschlussteil (6) mit ebenfalls einem Zentralbereich und daran anschließenden Einzelverschlussteilen (6) zugeordnet, womit ein blütenähnliches Gebilde entsteht. Die Wandung des tellerartigen Verschlussteils (6) ist in seiner Ruhestellung der gleichmäßigen Schalenform angepasst und liegt auf der Schalenform auf. Der Zentralbereich des tellerartigen Verschlussteils (6) kann kleiner, gleich oder größer als der Zentralbereich der Schale sein. Im dargestellten Beispiel sind beide Zentralbereiche gleich und kreisförmig ausgebildet, wobei dieser Kreis die Verbindungslinien (9) bildet. Beide Zentralbereiche sind vollflächig so miteinander verbunden dass der Kochgefäßaufsatz einstückig ist.

Alternativ wäre es auch möglich einen einfach gestalteten, kreisscheibenförmigen Verschlussteller vorzusehen, der im Grundriss die Durchtrittsöffnungen übergreift und dessen Kreisrand im Ruhezustand auf der Schalenform aufliegt und somit innerhalb dieser Auflagefläche beliebig gestaltet sein kann, wobei seine Öffnungsstellung dadurch erreicht wird, dass sich der Verschlusstellerrand von der Schalenform abhebt und dabei den Flüssigkeitsdurchfluss vorzugsweise für mehrere oder alle Durchtrittsöffnungen freigibt. Dieses Anheben kann entweder dadurch erreicht werden, dass der Tellerrand gegenüber durch die hochkochende Flüssigkeit nach oben gebogen wird. Diese Anheben könnte alternativ dadurch erreicht werden, dass der Verschlussteller z.B. vertikalbeweglich mit dem Kochgefäßaufsatz verbunden ist und der gesamte Verschlussteller geführt angehoben wird. Um den Flüssigkeitsaustritt zwischen dem Kochgefäß (7) und dem Kochgefäßaufsatz (1) entlang der Kontaktflächen (11) zuverlässig zu verhindern sind bei dem Ausführungsbeispiel nach Fig. 3 an der Unterseite der Schalenform elastische Silikonringbereiche mit den Durchmessern vorgesehen, die den üblichen Kochgefäßdurchmessem entsprechen. Neben dem innersten Silikonringbereich sind an der Schalenunterseite noch Noppen vorgesehen, die ein zentrisches Plazieren des Kochgefäßaufsatzes auf dem Kochgefäß ermöglichen.

Der Kochvorgang, das Erreichen der Öffnungsbewegung des Verschlussteiles und sein Zurückbewegen in den Ruhezustand erfolgt analog den zu Fig. 1 und 2 beschriebenen Abläufen.

Wie bereits erwähnt, kann der Kochvorgang sehr turbulent ablaufen. Nicht nur in diesem Falle verhindert der Kochgefäßaufsatz auch ein zu starkes Spritzen und damit eine daraus resultierende Kochstellenverschmutzung. Natürlich kann der Kochgefäßaufsatz ohne weiteres auch als Abdeckung bzw. Deckel für nicht zum Überkochen neigendem Koch- oder Bratgut und/oder für jede Art von Koch- oder Bratgeschirr verwendet werden.

## Patentansprüche

1. Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der als Auffangschale ausgebildet ist, mindestens eine Durchtrittsöffnung (2) für die Flüssigkeit aufweist, wobei der Durchtrittsöffnung (2) bzw. den Durchtrittsöffnungen (2) mindestens ein flächiges Verschlussteil (6) zugeordnet ist, das mit dem Kochgefäßaufsatz (1) verbunden ist, wobei das flächige Verschlussteil (6) im nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind und wobei die hochkochende Flüssigkeit durch die geöffnete Durchtrittsöffnung (2) bzw. die geöffneten Durchtrittsöffnungen (2) in die Auffangschale gelangt und wieder in das Kochgefäß (7) zurücklaufen kann, wobei der Kochgefäßaufsatz auf Kochgefäße (7) mit unterschiedlichen Durchmessern aufsetzbar ist, wobei zumindest die Kontaktflächen (11) des Kochgefäßaufsatzes (1) zu den unterschiedlichen Kochgefäßen (7) aus einem elastischen Material, insbesondere aus Silikon gebildet sind, und wobei das flächlge Verschlussteil (6) in Art eines Membranventils so gestaltet und mit dem Kochgefäßaufsatz verbunden ist, dass das flächige Verschlussteil (6) der Öffnungsbewegung einen geringen Widerstand entgegensetzt.

2. Kochgefäßaufsatz nach Anspruch 1, **dadurch gekennzeichnet, dass** mehrere Durchtrittsöffnungen (2) in einem Kreisringbereich zwischen einem Zentralbereich und Außenringbereich des Kochgefäßaufsatzes (1) vorgesehen sind.

3. Kochgefäßaufsatz nach Anspruch 2, **dadurch gekennzeichnet, dass** mehrere Durchtrittsöffnungen (2) im Grundriss gesehen zentralsymmetrisch angeordnet und im wesentlichen kreissektorförmig ausgebildet sind, wobei deren zentrumsfemen Ecken an den Kreissegmenten und/oder deren zentrumsnahen Ecken abgerundet oder abgeschnitten sind, und dass zwischen den Radialseiten der Durchtrittsöffnungen (2) radiale Verbindungsstege (8) des Kochgefäßaufsatzes (1) angeordnet sind, die sich von dessen Zentralbereich zum zentrumsfemen Außenringbereich erstrecken.

4. Kochgefäßaufsatz nach Anspruch 1, **dadurch gekennzeichnet, dass** eine zentrale Durchtrittsöffnung (2) vorgesehen ist.

5. Kochgefäßaufsatz nach einem der Ansprüche 1 bis 4, **dadurch gekennzeichnet, dass** über jeder oder mehreren oder allen Durchtrittsöffnung(en) (2) ein Verschlussteil (6) zugeordnet ist, oder dass jeder Durchtrittsöffnung (2) zwei benachbarte Verschlussteile (6) zugeordnet sind, wobei die Ränder der benachbarten Verschlussteile (6) im Bereich der Durchtrittsöffnung (2) beieinander liegen oder sich überlappen.

6. Kochgefäßaufsatz nach einem der Ansprüche 1 bis 5, **dadurch gekennzeichnet, dass** zumindest die Berührungsränder des Verschlussteils (6) bzw. der Verschlussteile (6) mit dem Kochgefäßaufsatz der dortigen Formgebung des Kochgefäßaufsatzes (2) im wesentlichen entsprechen und/oder das Verschlussteil (6) bzw. die Verschlussteile (6) die zugeordneten Durchtrittsöffnung(en) (2) überlappen oder überdecken.

7. Kochgefäßaufsatz nach einem der Ansprüche 1 bis 6, **dadurch gekennzeichnet, dass** das bzw. die Verschlussteil(e) (2) zumindest bereichsweise aus einem elastischen Material, insbesondere Silikon gebildet sind.

8. Kochgefäßaufsatz nach einem der Ansprüche 1 bis 7, **dadurch gekennzeichnet, dass** das bzw. die Verschlussteil(e) (6) eine geringe Dicke und/oder ein geringes Gewicht aufweisen.

9. Kochgefäßaufsatz nach einem der Ansprüche 1 bis 8, **dadurch gekennzeichnet, dass** das bzw. die Verschlussteil(e) (6) klappenartig zwischen der Ruhestellung und der Öffnungsstellung bewegbar sind .

10. Kochgefäßaufsatz nach einem der Ansprüche 1 bis 9, **dadurch gekennzeichnet, dass** das Verschlussteil (6) mit Rippen und/oder Kerben versehen ist und/oder die Dicke des Verschlussteils (6) bevorzugt zu seinen freien, nicht mit dem Kochgefäßaufsatz (1) verbundenen Rändern hin abnimmt und/oder mindestens ein Verschlussteil (6) eine Anlagefläche aufweist, die am Ende der Bewegung von der Öffnungsstellung in die Ruhestellung mit einer am Rand der Durchtrittsöffnung (2) ausgebildeten weiteren Anlagefläche, vorzugsweise einer in seine Bewegungsbahn hineinreichende Schrägfläche oder Anschlagnoppe, in Wirkverbindung gelangt und damit nur eine Öffnungsrichtung erlaubt.

11. Kochgefäßaufsatz nach einem der Ansprüche 1 bis 10, **dadurch gekennzeichnet, dass** das Verschlussteil (6), in seinem Zentralbereich mit dem Kochgefäßaufsatz (1) verbunden ist und mit einem daran anschließenden Ringbereich im Ruhezustand die Durchtrittsöffnung (2) bzw. Durchtrittsöffnungen im wesentlichen verschließt.

12. Kochgefäßaufsatz nach einem der Ansprüche 1 bis 11, **dadurch gekennzeichnet, dass** das membranventilartige Verschlussteil (6) als eigenes, mit dem restlichen Kochgefäßaufsatz verbindbares Bauteil gebildet ist.

13. Kochgefäßaufsatz nach einem der Ansprüche 1 bis 12, **dadurch gekennzeichnet, dass** er im Querschnitt und von innen nach außen gesehen einen im wesentlichen horizontal verlaufenden Zentralbereich, dann einen Ringabschnitt mit ansteigender Neigung, dann einen Kuppelabschnitt, dann einen nach unten abfallenden Ringabschnitt und dann wieder einen zweiten, nach oben ansteigenden Ringabschnitt bis zum Kochgefäßaufsatzrand aufweist, wobei die Durchtrittsöffnungen (2) vom inneren Zentralbereich bis zum äußeren Bereich des nach unten abfallenden Ringabschnittes oder bis zum inneren Bereich des zweiten ansteigenden Ringabschnittes reichen.

14. Kochgefäßaufsatz nach einem der Ansprüche 1 bis 13, **dadurch gekennzeichnet, dass** er gänzlich aus Silikon gebildet ist und/oder mit Rippen und/oder Kerben und/oder Noppen (12) versehen ist.

## Claims

1. Cooking vessel attachment (1) for preventing boiling over of liquids, in particular of liquids which foam during cooking having a high protein or starch content, such as milk, cooking water of potatoes or noodles or the like, which is designed as a collecting bowl, has at least one passage opening (2) for the liquid, wherein at least one two-dimensional closure part (6), which is connected to the cooking vessel attachment (1), is assigned to the passage opening (2) or the passage openings (2), wherein the two-dimensional closure part (6) in the rest state not in contact due to the boiling or foaming liquid essentially closes the passage opening (2) assigned to it or the passage openings (2) assigned to it, and due to exposure to the opening force being produced during contact with the boiling or foaming liquid (3) can be moved to an open position in which the passage opening (2) or the passage openings (2) are at least partly released and wherein the boiling liquid passes through the opened passage opening (2) or the opened passage openings (2) into the collecting bowl and may run back again to the cooking vessel (7), wherein the cooking vessel attachment can be placed on cooking vessels (7) having different diameters, wherein at least the contact surfaces (11) of the cooking vessel attachment (1) with the different cooking vessels (7) are formed from a resilient material, in particular from silicone, and wherein the two-dimensional closure part (6) is designed like a membrane valve and connected to the cooking vessel attachment so that the two-dimensional closure part (6) sets a low resistance to the opening movement.

2. Cooking vessel attachment according to claim 1, **characterised in that** several passage openings (2) are provided in a circular ring region between a central region and outer ring region of the cooking vessel attachment (1).

3. Cooking vessel attachment according to claim 2, **characterised in that** several passage openings (2) are arranged to be centrally symmetrical, seen in outline, and designed to be essentially like a circle sector, wherein the corners thereof which are remote from the centre are rounded off or cut off at the segments of the circle and/or the corners thereof which are close to the centre, and **in that** radial connecting bars (8) of the cooking vessel attachment (1), which extend from its central region to the outer ring region remote from the centre, are arranged between the radial sides of the passage openings (2).

4. Cooking vessel attachment according to claim 1, **characterised in that** a central passage opening (2) is provided.

5. Cooking vessel attachment according to one of claims 1 to 4, **characterised in that** a closure part (6) is assigned to each or several or all passage opening(s) (2), or **in that** two adjacent closure parts (6) are assigned to each passage opening (2), wherein the edges of the adjacent closure parts (6) lie together or overlap in the region of the passage opening (2).

6. Cooking vessel attachment according to one of claims 1 to 5, **characterised in that** at least the contact edges of the closure part (6) or of the closure parts (6) with the cooking vessel attachment essentially correspond to the design there of the cooking vessel attachment (2) and/or the closure part (6) or the closure parts (6) overlap or cover the assigned passage opening(s) (2).

7. Cooking vessel attachment according to one of claims 1 to 6, **characterised in that** the closure part or parts (2) are formed at least in some regions of a resilient material, in particular silicone.

8. Cooking vessel attachment according to one of claims 1 to 7, **characterised in that** the closure part or parts (6) have a low thickness and/or a low weight.

9. Cooking vessel attachment according to one of claims 1 to 8, **characterised in that** the closure part or parts (6) can be moved like a flap between the rest position and the open position.

10. Cooking vessel attachment according to one of claims 1 to 9, **characterised in that** the closure part (6) is provided with ribs and/or notches and/or the thickness of the closure part (6) decreases preferably towards its free edges not connected to the cooking vessel attachment (1) and/or at least one closure part (6) has a contact surface which comes into operative connection with a further contact surface formed at the edge of the passage opening (2), preferably an inclined surface or stop knob extending into its movement path, at the end of the movement from the open position to the rest position, and hence permits only one direction of opening.

11. Cooking vessel attachment according to one of claims 1 to 10, **characterised in that** the closure part (6) is connected in its central region to the cooking vessel attachment (1) and with a ring region connected thereto in the rest state essentially closes the passage opening (2) or passage openings.

12. Cooking vessel attachment according to one of claims 1 to 11, **characterised in that** the closure part (6) like a membrane valve is formed as a separate component which can be connected to the remaining cooking vessel attachment.

13. Cooking vessel attachment according to one of claims 1 to 12, **characterised in that**, seen in cross-section and from the inside out, it has an essentially horizontally running central region, then a ring section with rising incline, then a dome section, then a downwardly dropping ring section and then again a second, upwardly rising ring section as far as the edge of the cooking vessel attachment, wherein the passage openings (2) extend from the inner central region to the outer region of the downwardly dropping ring section or to the inner region of the second rising ring section.

14. Cooking vessel attachment according to one of claims 1 to 13, **characterised in that** it is formed completely from silicone and/or is provided with ribs and/or notches and/or knobs (12).

## Revendications

1. Couvercle de récipient de cuisson (1) pour éviter le débordement de liquides, en particulier de liquides moussant lors de la cuisson, avec une part élevée de blanc d'oeuf ou d'amidon tels que du lait, de l'eau de cuisson de pommes de terre ou de pâtes ou similaires, lequel couvercle est réalisé comme un récipient collecteur, et présente au moins une ouverture de passage (2) pour le liquide, dans lequel au moins un élément de fermeture plan (6) qui est reliée au couvercle de récipient de cuisson (1) est associé à l'ouverture de passage (2) ou aux ouvertures de passage (2), dans lequel l'élément de fermeture plan (6) ferme sensiblement l'ouverture de passage (2) qui lui est associée ou les ouvertures de passage (2) qui lui sont associées à l'état de repos dans lequel il n'est pas en contact avec le liquide en ébullition ou qui mousse beaucoup, et peut être déplacée par la sollicitation de la force d'ouverture apparaissant lors du contact avec le liquide en ébullition ou qui mousse beaucoup (3) dans une position d'ouverture, dans laquelle l'ouverture de passage (2) ou les ouvertures de passage (2) sont libérées au moins en partie et le liquide en ébullition parvient par l'ouverture de passage (2) ouverte ou les ouvertures de passage (2) ouvertes dans le récipient collecteur et peut revenir de nouveau dans le récipient de cuisson (7), dans lequel le couvercle de récipient de cuisson peut être placé sur des récipients de cuisson (7) de différents diamètres, au moins les surfaces de contact (11) du couvercle de récipient de cuisson (1) avec les différents récipients de cuisson (7) étant constituées d'un matériau élastique, en particulier de silicone, et la partie de fermeture plane (6) étant conçue comme une soupape à diaphragme et reliée au couvercle de récipient de cuisson de sorte que la partie de fermeture (6) plane oppose une faible résistance au mouvement d'ouverture.

2. Couvercle de récipient de cuisson selon la revendication 1, **caractérisé en ce que** plusieurs ouvertures de passage (2) sont prévues dans une zone annulaire entre une zone centrale et zone annulaire extérieure du couvercle de récipient de cuisson (1).

3. Couvercle de récipient de cuisson selon la revendication 2, **caractérisé en ce que** plusieurs ouvertures de passage (2) sont disposées de manière symétrique et centrale vu en projection horizontale et sont réalisées sensiblement en forme de secteur de cercle, leurs coins éloignés du centre sur les segments de cercle et/ou leurs coins proches du centre étant arrondis ou découpés et **en ce que** des nervures de liaison (8) radiales du couvercle de récipient de cuisson (1) sont disposées entre les côtés radiaux des ouvertures de passage (2), lesquelles s'étendent de sa zone centrale à la zone annulaire extérieure éloignée du centre.

4. Couvercle de récipient de cuisson selon la revendication 1, **caractérisé en ce qu'**une ouverture de passage centrale (2) est prévue.

5. Couvercle de récipient de cuisson selon l'une quelconque des revendications 1 à 4, **caractérisé en ce qu'**une partie de fermeture (6) est associée à chacune, plusieurs ou toutes les ouvertures de passage (2), ou **en ce que** deux parties de fermeture (6) contiguës sont associées à chaque ouverture de passage (2), les bords des parties de fermeture (6) contiguës se trouvant près l'un de l'autre ou se chevauchant dans la zone de l'ouverture de passage (2).

6. Couvercle de récipient de cuisson selon l'une quelconque des revendications 1 à 5, **caractérisé en ce qu'**au moins les bords de contact de la partie de fermeture (6) ou des parties de fermeture (6) avec le couvercle de récipient de cuisson correspondent sensiblement à la forme qui s'y trouve du couvercle de récipient de cuisson (2) et/ou la partie de fermeture (6) ou les parties de fermeture (6) chevauchent ou recouvrent la/les ouverture(s) de passage associée(s) (2).

7. Couvercle de récipient de cuisson selon l'une quelconque des revendications 1 à 6, **caractérisé en ce que** la ou les parties de fermeture (2) sont constituées au moins par portions d'un matériau élastique, en particulier de silicone.

8. Couvercle de récipient de cuisson selon l'une quelconque des revendications 1 à 7, **caractérisé en ce que** la ou les parties de fermeture (6) présentent une faible épaisseur et/ou un poids faible.

9. Couvercle de récipient de cuisson selon l'une quelconque des revendications 1 à 8, **caractérisé en ce que** la ou les parties de fermeture (6) sont mobiles comme un clapet entre la position de repos et la position d'ouverture.

10. Couvercle de récipient de cuisson selon l'une quelconque des revendications 1 à 9, **caractérisé en ce que** la partie de fermeture (6) est pourvue de nervures et/ou d'encoches et/ou l'épaisseur de la partie de fermeture (6) diminue de préférence vers ses bords libres non reliés au couvercle de récipient de cuisson (1) et/ou au moins une partie de fermeture (6) présente une surface d'appui qui parvient en liaison active à la fin du mouvement de la position d'ouverture à la position de repos avec une autre surface d'appui réalisée sur le bord de l'ouverture de passage (2), de préférence une surface oblique ou un nope de butée s'engageant dans sa trajectoire, et permet ainsi un seul sens d'ouverture.

11. Couvercle de récipient de cuisson selon l'une quelconque des revendications 1 à 10, **caractérisé en ce que** la partie de fermeture (6) est reliée dans sa zone centrale au couvercle de récipient de cuisson (1) et ferme sensiblement avec une zone annulaire contiguë à celle-ci à l'état de repos l'ouverture de passage (2) ou les ouvertures de passage.

12. Couvercle de récipient de cuisson selon l'une quelconque des revendications 1 à 11, **caractérisé en ce que** la partie de fermeture (6) de type soupape à diaphragme est formée comme un composant propre pouvant être relié au reste du couvercle de récipient de cuisson.

13. Couvercle de récipient de cuisson selon l'une quelconque des revendications 1 à 12, **caractérisé en ce qu'**il présente, vu en coupe et de l'intérieur vers l'extérieur, une zone centrale s'étendant sensiblement horizontalement, une portion annulaire avec une pente croissante, une portion de coupole, une portion annulaire s'inclinant vers le bas et de nouveau une seconde portion annulaire croissante vers le haut jusqu'au bord de couvercle de récipient de cuisson, les ouvertures de passage (2) s'étendant de la zone centrale intérieure jusqu'à la zone extérieure de la portion annulaire s'inclinant vers le bas ou jusqu'à la zone intérieure de la seconde portion annulaire croissante.

14. Couvercle de récipient de cuisson selon l'une quelconque des revendications 1 à 13, **caractérisé en ce qu'**il est constitué entièrement de silicone et/ou est pourvu de nervures et/ou d'encoches et/ou de nopes (12).
